# EUROPEAN PATENT APPLICATION

(11) **EP 1 605 428 A1**
(43) Date of publication of application: **14.12.2005**
(21) Application number: 04013366.2
(22) Date of filing: 07.06.2004
(51) Int. Cl.: G09G 3/20

(54) **Display for a mobile terminal for wireless communication**

(71) Applicant: Sony Ericsson Mobile Communications AB, 221 88 Lund (SE)
(72) Inventor: Hunt, Alexander, 212 17 Malmö (SE); Ek, Martin, 240 10 Dalby (SE)
(74) Representative: Körber, Martin Hans

(57) **Abstract**

The invention relates to a display for a mobile terminal for wireless communication comprising a first display area (2) with a high colour depth and a second display area (3) with a low colour depth.

The invention further relates to a method for a display for a mobile terminal for wireless communication.

## Description

### TECHNICAL FIELD OF THE INVENTION

The present invention relates to a display for a mobile terminal for wireless communication. The invention further relates to a method for a display for a mobile terminal for wireless communication. Specifically, the present invention relates to the problem of displaying an image on source restricted devices like mobile terminals.

### DESCRIPTION OF RELATED ART

The displays in mobile terminals for wireless communication, such as mobile telephones, pagers, personal digital assistants, electronic organisers, smartphones and so forth, sometimes have an associated memory (RAM) to store the image shown on the display. The size of the image and therefore the size of the RAM amongst other things is dependent on the colour depth of the image. Therefore, in order to show an image having a high colour depth a large RAM has to be implemented in the mobile terminal for the display, so that a sufficiently large RAM is present to store the displayed image.
The disadvantage of adapting the size of the RAM to the memory capacities needed for showing an image with a high colour depth is, that increasing the size of the RAM is connected with significant costs.

A possibility to display an image with a high colour depth without increasing the RAM is to use an RGB-interface, which processes the colour signals for red, green and blue separately and thereby constantly updates the display.
The disadvantage of such an interface is the constant and therefore power-consuming updating procedure.

### SUMMARY

The general problem with the state of art displays for mobile terminals for wireless communication as outlined above are the high costs or the high power consumption that arise when an image with a high colour depth has to be displayed.

The object of the present invention is therefore to provide a display for a mobile terminal for wireless communication which is able to display an image with a high colour depth without consuming unnecessary storage or power of the mobile terminal.

The above-mentioned object is achieved by a display for a mobile terminal for wireless communication according to claim 1.

The display for a mobile terminal for wireless communication according to the present invention comprises a first display area with a high colour depth and a second display area with a low colour depth.

The above-mentioned object is further achieved by a method for a display for a mobile terminal for wireless communication according to claim 12.

The method for a display for a mobile terminal for wireless communication according to the present invention comprises the steps of providing a first display area with a high colour depth and a second display area with a low colour depth.

Advantageously, a picture is shown in the first display area.

Advantageously, a frame is shown in the second display area.

Further advantageously, icons are shown in the second display area.

Advantageously, the first display area has a colour depth of 24 bit.

Further advantageously, the second display area has a colour depth of 8 bit.

Preferably, the mobile terminal according to the present invention comprises a control means for controlling the displaying of a picture in the first display area and for controlling the displaying of a frame and/or icons in the second display area.

Advantageously, the control means adapts the picture in order to display it in the first display area.

Further, advantageously the control means adapts the picture automatically according to predefined parameters.

Preferably, the control means adapts the picture according to parameters set by the user.

It should be emphasised, that the term "comprises" / "comprising" when used in this specification is taken to specify the presence of the stated features, integers, steps or components, but does not preclude the presence or addition of one or more other features, integers, steps, components or groups thereof.

### BRIEF DESCRIPTION OF THE DRAWINGS

Embodiments of the invention will now be described, by way of example only, with reference to the accompanying drawings, in which:
Fig. 1 is a block diagram showing a first embodiment of the present invention,
Fig. 2 is a block diagram showing a second embodiment of the present invention,
Fig. 3 is a schematic block diagram of a mobile terminal with a display according to the present invention, and
Fig. 4 is a flowchart showing the process of adapting the picture.

### DETAILED DESCRIPTION OF EMBODIMENT

Generally, the size of a picture depends on the resolution and on the colour depth. The resolution is the total number of pixels, that is the product of the image height and image length in pixels. Further, the colour depth, that is the number of colours shown in an image depends on the number of bits per pixel. Hereby, with a given number of bits b per pixel the colour depth can be calculated as 2^{b}. As an example, for a black and white image the number of bits per pixel is 1 and the resulting number of colours is 2. With increasing bits per pixel true colour with a colour depth of 2²⁴ that is about 16 million can be achieved with 24 bits per pixel.
The size of an image can then be calculated as the product of the number of bits per pixel and the number of pixels. A QVGA display for example with a resolution of 240 · 320 pixels and a colour depth of 18 will have a RAM size of 240 · 320 · 18 = 1382400 bits corresponding to 172,8 kbytes.

The principal idea of the present invention is to adapt the display and the displayed motives to a given RAM size. The display is therefore divided in at least two areas, whereby a first display area is used to show an image, motive, picture or the like with a high colour depth, and a second display area is used to show an image, motive, picture or the like with a low colour depth.
Thereby, the second display area having a low colour depth can be used for displaying simple, that is low colour motives and the bigger part of the RAM can be used for displaying a high colour picture in the first display area in an optimum manner.
It is to be noted, that the display may also be divided into three or more display areas each having a different colour depth or partly having the same colour depth.

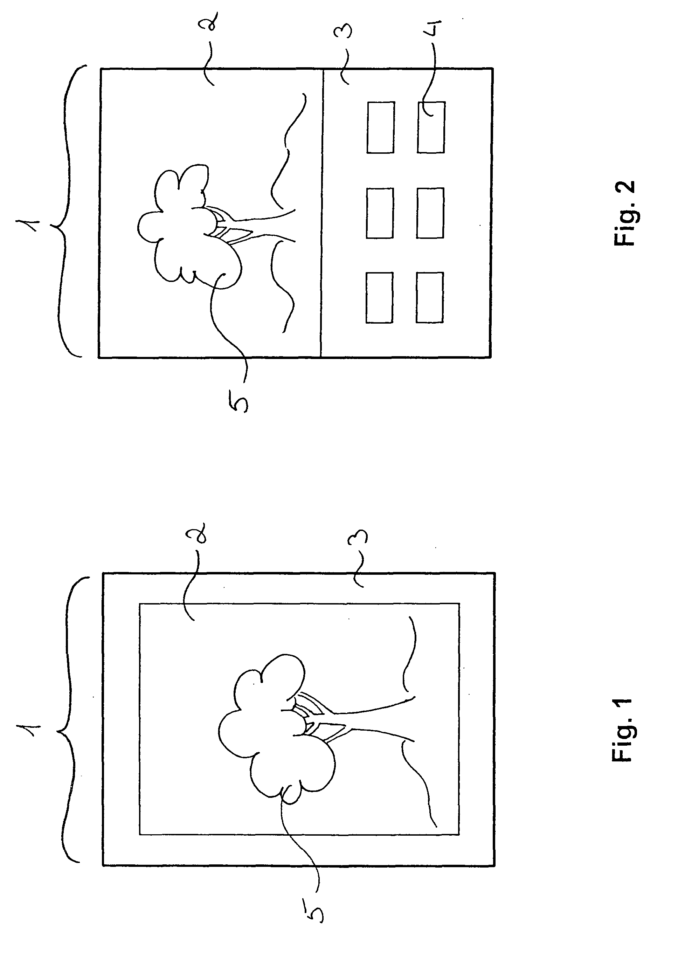

Fig. 1 shows a display according to a first embodiment of the present invention. Hereby, the display is divided into a first display area 2 and a second display area 3. The first display area 2 having a higher colour depth than the second display area 3 can be used to show a picture 5 having full or high colour, e.g. with 18 or 24 bits per pixel. The second display area 3 is used as a frame for the picture 5. The frame can be for example be black and white, which corresponds to 1 bit per pixel, or with 8 colours, which corresponds to 3 bit per pixel.
It is to be noted, that the above examples of 18 and 24 bits per pixel for the first display area and 1 or 3 bit per pixel for the second display area are not intended to limit the present invention, but that any possible colour depth can be used for each of the two display areas.

The position of the first display area 2 in relation to the second display area 3 may be as shown in Fig. 1, where the second display area 3 constitutes a frame of constant width around the first display area 2 positioned in the centre of the display 1. Otherwise the size of the first display area 2 may be changed or the width of the frame may vary on the different sides of the first display area 2. Also a change of the shape of the first display area 2 is possible, e.g. into a circle, an ellipse, a star or any other figure.

Fig. 2 shows a display according to a second embodiment of the present invention. Hereby, again in the first display area 2 a picture 5 is shown with a high colour depth and in the second display area 3 a low colour depth is used. Further, icons 4 are shown in the second display area 3. With the icons 4 it is possible for the user to input data, select options or scroll through menus or to accomplish other actions on the mobile terminal. Thereby, a picture 5 can be shown with a high colour depth and at the same time it is possible for the user to simply control the mobile terminal without the exceeding the capacities of the RAM size.
Again it has to be noted, that for the first display area 2 and the second display 3 area different colour depths, sizes or shapes can be used.

The term "mobile terminal" includes portable radio communication equipment. The term "portable radio communication equipment" includes all equipment such as mobile telephones, pagers, digital still cameras, communicators, i.e. electronic organisers, smartphones, personal digital assistants or the like.

If the RAM size required by a picture has to be reduced for displaying it in the first display area 2, this can be accomplished by reducing the resolution of the picture. Taking again the example of a QVGA display having a resolution of 240 x 320 pixel with a colour depth of 18 bit, then the display can be divided into a first display area 2 of 180 x 220 pixel for displaying the picture with a high colour depth, that is up to 24 bit, and into a second display area 3 having a lower colour depth, e.g. 8 bit, thereby occupying less RAM capacities.

The terms high and low colour depth hereby may not only refer to the fact, that the colour depth of the first display area 2 is higher than the colour depth of the second display area 3, but also to a specific relation of the colour depths. For example it can be determined, that the colour depth of the second display area 3 is at maximum a third of the colour depth of the first display area 2 or that the colour depth of the second display area 3 is less than a half of the colour depth of the first display area 2.

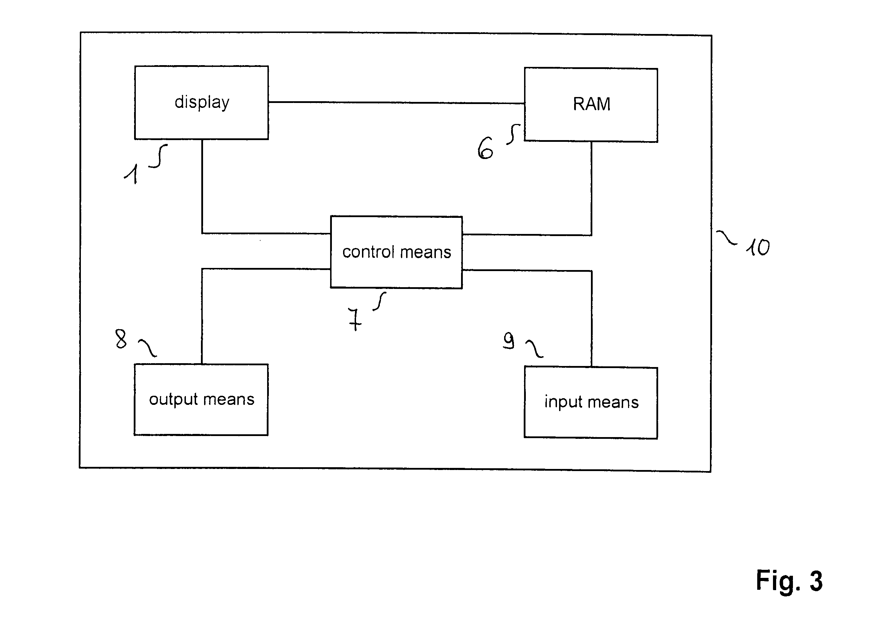

Fig. 3 shows a schematic block diagram of mobile terminal with a display according to the present invention. A mobile terminal 10, such as mobile telephones, pagers, personal digital assistants, electronic organisers, smartphones and so forth , comprises a display 1 and a RAM 6 associated to the display 1 for storing the pictures, images, icons and the like shown on the display 1.
An input means 9, which may be a keypad, a touchpad, a mouse, recognition of speech, an interface for wireless transmission, e.g. via infrared, or for transmission with different means, e.g. a serial cable, enables the user to input data or information. An output means 10 may e.g. be a loudspeaker, an interface for a printer, a fax or a connection to another portable or stationary device, outputs information, data or programs to the user or to another device. This way, it is possible for the user to operate the functions of the mobile terminal 10.
A control means 7 controls the operation of the whole mobile terminal 10 and supervises the transmission, storage, deletion and processing of data or information. Further, the control 7 is responsible for the adaptation of the picture 5 to the given RAM 6 in order to display the picture 5 in an optimum manner on the display 1.

As already explained above, the adaptation of the picture 5 to a given RAM 6 can be accomplished either by changing the resolution or the colour depth of the picture 5. Instead of changing the picture 5 itself it is also possible, to change the size of the first display area 2 and/or the second display area 3 thereby always taking into account the given size of the RAM 6. The decision, whether to change the resolution of the picture 5, the colour depth of the picture 5, the first display area 2 and/or the second display area 3 may be accomplished either automatically by the control means 7 or by the user.

If for example a picture 5 has a size smaller than the RAM 6, then the picture can be displayed unchanged or the resolution or the colour depth can even be increased. If a picture 5 has a size larger than the size of the RAM 6, then the resolution and/or the colour depth has to be decreased in order to display the picture 5 in the first display area 2 or the first display area 2 and the second display area 3 have to be changed in size.
Hereby, the amount of how much the resolution or the colour depth of a picture 5 is scaled down, may depend on the original resolution and colour depth. That means, that if a picture 5 has a very high resolution, then the control means 7 may automatically enlarge the first display area 2 and/or lower the colour depth of the second display area 3 in order to show the picture 5 with a resolution as high as possible. Another possibility is to only show a part of the picture 5 depending either on the users choice or on an automatic selection by the control means 7. If for example the user selects via the input means 9 to have a maximum colour depth for the displayed picture 5, then the control means 7 outputs via the output means 8 the possibilities between which the user can select, that is if the picture 5 has to be displayed with a very low resolution, if only a part of the picture 5 has to be displayed, if the first display area 2 has to be enlarged, if the colour depth of the second display area 3 has to be decreased or the like.

Thereby, either automatically by the control means 7 or selected by the user, the picture 5 is displayed in an optimum manner by taking into account the original parameters of the picture 5, the sources given by the mobile terminal 10 and the options selected by the user.

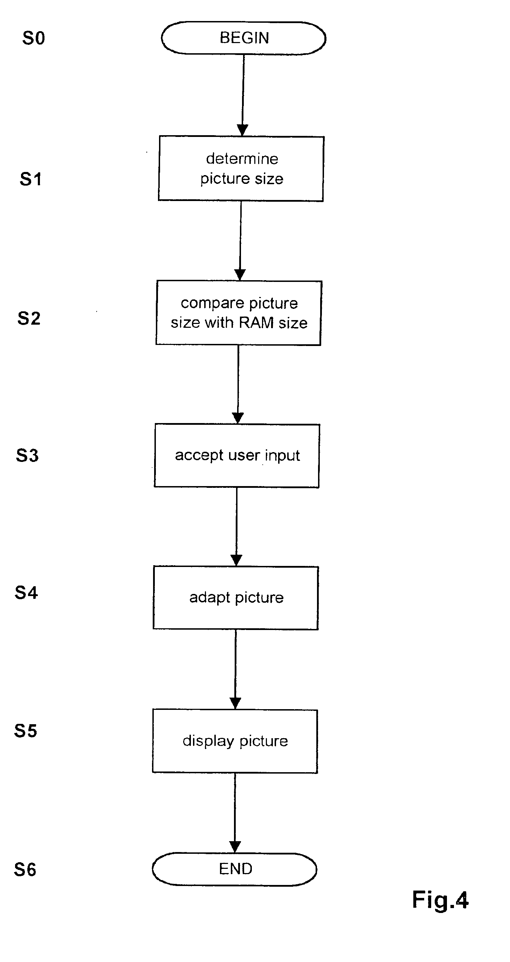

Fig. 4 shows a flowchart of the process how a picture 5 can be adapted and displayed. In step S0 the process begins, e.g. with switching on the mobile terminal 10. In the next step S1 the size of the picture 5 which has to be displayed is determined, that is the actual resolution and colour depth is determined. The size of the picture 5 in step S2 is then compared with the given size of the RAM 6. Further, in step S3 the user has the possibility to input instructions how he wants the picture 5 to be displayed. In step S4 the picture 5 is adapted to the given size of the RAM 6, to the first display area 2 and to the instructions input by the user as explained above. Finally, the picture 5 is displayed on the first display area 1 in step S5. The process ends in step S6, e.g. with switching off the mobile terminal 10.

## Claims

1. Display for a mobile terminal for wireless communication comprising
a first display area (2) with a high colour depth and
a second display area (3) with a low colour depth.

2. Display according to claim 1,
**characterised in**
**that** a picture (5) is shown in the first display area (2).

3. Display according to claim 1 or 2,
**characterised in**
**that** a frame is shown in the second display area (3).

4. Display according to any of claims 1 to 3,
**characterised in**
**that** icons (4) are shown in the second display area (3).

5. Display according to any of the claims 1 to 4,
**characterised in**
**that** the first display area (2) has a colour depth of 24bit.

6. Display according to any of the claims 1 to 5,
**characterised in**
**that** the second display (3) area has a colour depth of 8 bit.

7. Mobile terminal for wireless communication comprising a display (1) according to any of the preceding claims.

8. Mobile terminal according to claim 7,
**characterised by**
a control means (7) for controlling the displaying of a picture (5) in the first display area (2) and for controlling the displaying of a frame and/or icons (4) in the second display area (3).

9. Mobile terminal according to claim 8,
**characterised in**
**that** the control means (7) adapts the picture (5) in order to display it in the first display area (2).

10. Mobile terminal according to claim 9,
**characterised in**
**that** the control means (7) adapts the picture (5) automatically according to predefined parameters.

11. Mobile terminal according to claim 9,
**characterised in**
**that** the control means (7) adapts the picture (5) according to parameters set by the user.

12. Method for a display for a mobile terminal for wireless communication comprising the steps of
providing a first display area (2) with a high colour depth and
providing a second display area (3) with a low colour depth.

13. Method according to claim 12,
**characterised in**
showing a picture (5) in the first display area (2).

14. Method according to claim 12 or 13
**characterised in**
showing a frame in the second display area (3).

15. Method according to any of claims 12 to 14,
**characterised in**
showing icons (4) in the second display area.

16. Method according to any of the preceding claims,
**characterised in**
controlling the displaying of a picture (5) in the first display area (2) and
controlling the displaying of a frame and/or icons (4) in the second display area (3).

17. Method according to claim 16,
**characterised in**
adapting the picture (5) in order to display it in the first display area (2).

18. Method according to claim 17
**characterised in**
adapting the picture (5) automatically according to predefined parameters.

19. Method according to claim 17,
**characterised in**
adapting the picture (5) according to parameters set by the user.
